(19)

Europäisches
Patentamt
European
Patent Office
Office européen
des brevets

(11) **EP 2 214 395 A2**

(12) **EUROPEAN PATENT APPLICATION**

(43) Date of publication:
**04.08.2010 Bulletin 2010/31**

(51) Int Cl.:
*H04N 1/401* (2006.01)      *H04N 1/40* (2006.01)

(21) Application number: **10151819.9**

(22) Date of filing: **27.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.01.2009 JP 2009018729**

(71) Applicant: **Canon Kabushiki Kaisha**
**Tokyo 146-8501 (JP)**

(72) Inventors:
• **Miyazaki, Shinichi**
  **Ohta-ku, Tokyo (JP)**

• **Yanai, Tomokazu**
  **Ohta-ku, Tokyo (JP)**
• **Fujimoto, Yasunori**
  **Ohta-ku, Tokyo (JP)**

(74) Representative: **Hitching, Peter Matthew**
**Canon Europe Ltd**
**3 The Square**
**Stockley Park**
**Uxbridge**
**Middlesex**
**UB11 1ET (GB)**

(54) **Image processing apparatus, printing apparatus, and image processing method**

(57) When executing the gradation lowering processing to a data area in the lower side in multi-valued print data 403, an error generated by executing the gradation lowering processing to the data area in the lower side is stored in an information storage area 901B. On the other hand, the error thus distributed and stored is used for executing the gradation lowering processing to the data area "J" (Jth line) in multi-valued print data 404 relating to the next scan. In this way the error generated when executing the gradation lowering processing to the multi-valued print data is stored, which is used at the time of executing the gradation lowering processing to the multi-valued print data relating to the next scan. Therefore, the density is stored by receiving and delivering the error between the multi-valued print data in a scan unit.

FIG.9

EP 2 214 395 A2

## Description

BACKGROUND OF THE INVENTION

Field of the Invention

**[0001]** The present invention relates to an image processing apparatus, a printing apparatus, and an image processing method, and particularly, to a technology which generates print data by executing gradation lowering processing for multi-valued print data of each of divided images obtained by dividing an image into plural sections to reduce complementarities between the plural divided images.

Description of the Related Art

**[0002]** As an example of an apparatus for performing a print operation using a print head equipped with a plurality of print elements, there is conventionally known an inkjet printing apparatus using a print head provided with plural ink ejection openings. Among them, the most general serial type inkjet printing apparatus is designed to perform printing by repeating a main scan of making a print head scan a print medium and a conveying operation of conveying a printing medium in a direction intersecting with the main scan direction. Since such a serial type inkjet printing apparatus can be manufactured in a relatively small size and at a low cost, it has been widely prevalent for personal use.

**[0003]** In such a printing apparatus, a size and a formation position of dots formed by ink may vary due to a variation in a diameter of ejection opening and a variation in an ejection direction, thereby uneven density occurs in the printed image. Particularly, in the aforementioned serial type inkjet printing apparatus, the uneven density due to the variation in the ejection opening diameter or the like appears as stripe like density unevenness in a printed image, which possibly deteriorate a quality of the printed image.

**[0004]** As the configuration for overcoming this problem, a so-called multi-pass printing system is known. In the multi-pass printing, all pixels which the print head can print by one time of a main scan are distributed to plural times of the scans between which a conveying operation is performed and different ejection openings are associated with each of the plural times of the scans to perform printing. Thereby, the variations in ejection characteristics in the plurality of the ejection openings are dispersed into the plural times of the scans for completing the image, enabling the uneven density or the like to be indistinctive.

**[0005]** However, under recent situations where a higher-quality printing is required in the multi-pass printing system as described above, a density change or uneven density due to a shift of a print position (registration) per scan has been newly seen as a problem. The shift of the print position per the scan is caused by fluctuations in distance between the print medium and the ejection opening surface (distance from a sheet), fluctuations in a conveying amount of the print medium and the like, which appears as a shift between planes to be printed in respective scans (or nozzle lines). Therefore, a method of generating print data in the multi-pass print has been required in which even if the print position shift is generated between the planes, the image quality is not remarkably deteriorated due to the print position shift. In the present specification, regardless of fluctuations in any print condition, even if the print position shift between the planes is generated due to the fluctuation, resistance properties to the extent that the density change or the uneven density due to the print position shift is difficult to be generated are called "robustness".

**[0006]** Japanese Patent Laid-Open No. 2000-103088 describes a method of reducing the uneven density by increasing the robustness. This patent document has paid attention on a fact that the uneven density or the density change in the printed image due to variations in the aforementioned various print conditions including the print position shift between the planes is caused by a fact that print data distributed to each of plural times of scans are completely complementary with each other. The print data generation for each of the plural times of the scans is usually performed by using a mask corresponding to each of the plural times of the scans, and these masks are complementary with each other. Japanese Patent Laid-Open No. 2000-103088 describes an example where image data are divided at a state of the multi-valued data before the gradation lowering processing is executed to the multi-valued data, and the gradation lowering processing is executed for respective divided multi-valued data separately. In addition, Japanese Patent Laid-Open No. 2000-103088 describes that the aforementioned complementary relation is reduced, thereby not generating so large a density change even if the plural planes are shifted with each other.

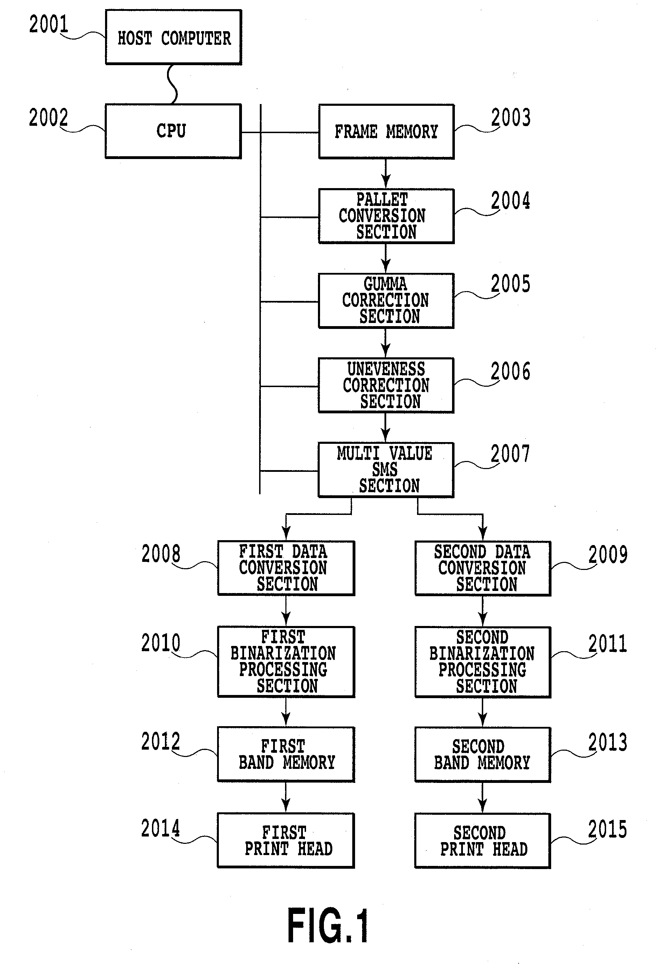

**[0007]** Fig. 1 is a block diagram showing a control configuration example for realizing data distribution described in Japanese Patent Laid-Open No. 2000-103088. This figure shows an example of distributing print data to two print heads (two nozzle lines). That is the figure shows an example of a case of performing printing to a same area with two print heads, which is equivalent to a case of performing printing a same area with two times of scan.

**[0008]** Multi-valued image data received from a host computer 2001 are subject to various kinds of image processing (2004 to 2006), and thereafter, a multi value SMS section 2007 generates data for a first print head and data for a second print head based on the data that has been subjected to the various kinds of image processing. Specially the same

multi-valued image data to which the image processing has been executed are prepared as the data for the first print head and the data for the second print head. In a first data conversion section 2008 and a second data conversion section 2009, conversion processing is executed using respective distribution coefficients. For example, a distribution coefficient of 0.55 is used to the data for the first print head and a distribution coefficient of 0.45 is used to the data for the second print head to execute the conversion processing. In consequence, the content of binarization processing to be executed later can be made different between the data for the first print head and the data for the second print head. Then, overlaps of dots by the first print head and dots by the second print head finally formed can be generated in a certain ratio. It should be noted that Japanese Patent Laid-Open NO. 2000-103088 describes, in addition to an example where the distribution coefficient varies between the data for the first print head and the data for the second print head, an example where an error diffusion matrix used in error diffusion processing as binarization processing or threshold values in the error diffusion matrix varies.

The multi-valued data converted as above are transferred to a first binarization processing section 2010 and a second binarization processing section 2011. In the first binarization processing section 2010 and the second binarization processing section 2011, the binarization processing is executed by an error diffusion method using an error diffusion matrix and threshold values, and the binarized image data are stored respectively in a first band memory 2012 and in a second band memory 2013. Thereafter, the first and second print heads eject ink according to the binary data stored in the respective band memories to perform printing.

According to the above configuration, even if the respective planes associated with the first and second heads are shifted from each other by one pixel, overlapped dots printed with two print heads newly increase but there exists overlapped dots separated from each other. Accordingly, in an area having a certain level of extent, the coverage of dots to a white area does not change so much and thus the change in image density is not drawn. More specifically, basically the complementarities or exclusiveness is removed in dot formation with the different scans or the different print heads to produce overlapped dots at a certain rate. Thereby, even if the print position shift occurs due to a fluctuation of scan speed of the carriage, a fluctuation of distance between a print medium and an ejection opening surface (distance from a sheet), a fluctuation of conveying amount, and the like, the degree of the change in image density and the degree of the density unevenness can be decreased.

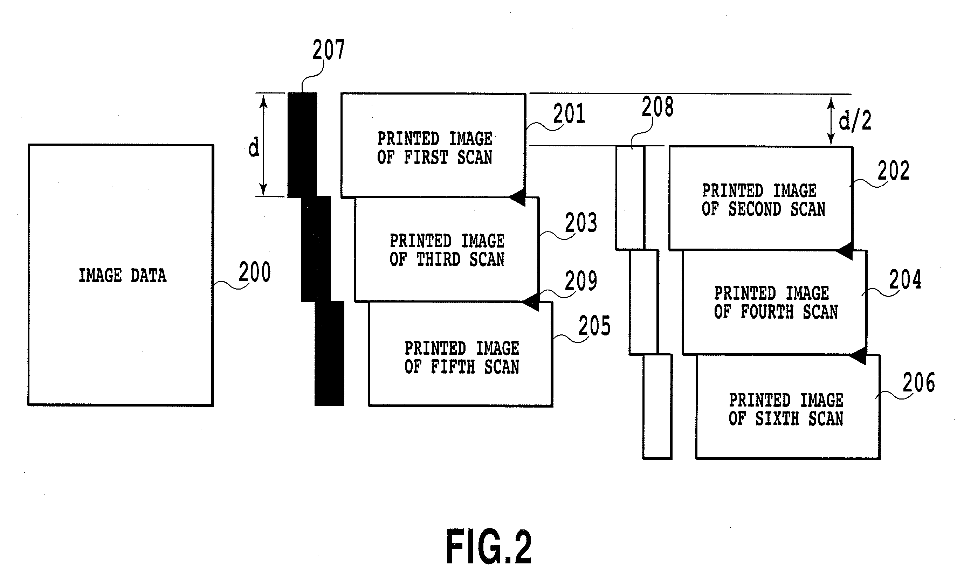

Fig. 2 is a diagram explaining a print operation using two print heads (number 207: first print head, number 208: second print head) described in Japanese Patent Laid-Open No. 2000-103088. The print head 207 is located in the upstream side in the conveying direction of the print medium and the print head 208 is located in the downstream side in the conveying direction of the print medium. An interval between the print heads 207 and 208 in the conveying direction is set in such a manner that a scan area of one print head on the print medium is shifted from a scan area of the other by 1/2 of an ejection opening arrangement width d of each print head.

The two print heads perform printing based upon image data contained in an area sized corresponding to the ejection opening arrangement width "d" of the print head among image data 200 in a first main scan. At this time, image data 201 which the print head 207 actually prints have a density value obtained by multiplying a density value of an individual pixel in the image data 200 by the aforementioned distribution coefficient (for example. 0.55). Next, the print medium is conveyed by a distance for generating the shift of the scan area of d/2 described above in a direction intersecting with the main scan direction and thereafter, the second main scan is performed by the print head 208. Image data 202 to be printed in a second main scan also have a density value obtained by multiplying the density value of the individual pixel data in the image data 200 by the aforementioned distribution coefficient (for example. 0.45). Upon paying attention on the scan area where the first main scan and the second main scan overlap, the printing is performed twice on this main scan area based upon the image data of the density value reduced correspondingly to the above distribution coefficients, resultantly conserving or realizing the density value of the original image data. Further, the third main scan and the fourth main scan are repeated by the two print heads in such a manner as to perform the conveying operation in between, thus printing an image of all the image data 200.

Incidentally in the print data generation in Japanese Patent Laid-Open No. 2000-103088, the error diffusion process is used as the gradation lowering processing as described above. The error diffusion process expresses the density of the image by changing density of dots to be formed and diffuses the error generated at the time of executing the gradation lowering processing based upon a comparison between a density value for each pixel and a threshold value to pixels in a predetermined ratio in a main scan direction and in a sub scan direction. In the error diffusion process, dots are arranged at relatively randomly and the density is expressed by the density of dots. Therefore, occurrence of moire is not required to be considered and it is possible to realize both the gradation properties and the high resolution. As a result, disperse properties in the arrangements of the dots printed by one time of the main scan are enhanced.

In addition, by distributing the multi-valued data at a stage of the multi-valued data as described above, the images printed by the plural times of the scans result in having the reduced complementary relation with each other. Therefore, even if the print position shift occurs due to deterioration of the accuracy in the scan or the like, an impact caused by the print position shift is reduced, that is, robustness are improved and the image density does not change largely. In consequence, a uniform image in which the uneven density is reduced can be printed.

However, the method described in Japanese Patent Laid-Open No. 2000-103088 is, as described above, configured so that the multi-valued image data corresponding to a given area (for example, data corresponding to one band as the print area which is printed by one time of the scan) are distributed to plural times of the scans and the gradation lowering processing is executed to the distributed individual multi-valued print data separately. Therefore, for example, an error generated at the time of executing the gradation lowering processing to the image data 201 shown in Fig. 2 can not be delivered to the other area 203 or the like. Accordingly, the density can not be conserved at all between the multi-valued print data in these areas. In a case where the density is thus not conserved between the areas, there occurs a problem that the uneven density is generated in a boundary portion 209 between the scan areas due to that the density is not conserved.

In addition, since the gradation lowering processing is executed to each of the distributed multi-valued data separately, there exists a problem that the dispersion properties of the dots are not guaranteed in the boundary 209 between the scan areas and the dots are recognized as the stripe like density unevenness. More specifically, since the dot arrangements are also not guaranteed between the scan areas, namely since the continuity of the dot arrangements is not guaranteed between the scan areas, there exists a problem that the dispersion properties of the dots in the boundary between the scan areas is damaged.

SUMMARY OF THE INVENTION

The present invention provides an image processing apparatus, a printing apparatus, and an image processing method in which multi-valued print data are divided into plural image data at a stage of the multi-valued print data and uneven density in the boundary between print areas due to an error generated at the time of executing gradation lowering processing to each divided image can be reduced.

The present invention in its first aspect provides an image processing apparatus as specified in claims 1 to 11.

The present invention in its second aspect provides a printing apparatus as specified in claim 12.

The present invention in its third aspect provides an image processing method as specified in claim 13.

The present invention in its fourth aspect provides a program as specified in claims 14. Such a program can be provided by itself or carried by a carrier medium as specified in claim 15. The carrier medium may be a recording or other storage medium. The carrier medium may also be a transmission medium. The transmission medium may be a signal.

According to the above configuration, the error generated at the time of executing the gradation lowering processing to the multi-valued print data of one scan is used for the multi-valued print data of the other scan, thereby making it possible to print an image with a high quality in which the uneven density or the stripe like density unevenness is reduced.

Further features of the present invention will become apparent from the following description of exemplary embodiments (with reference to the attached drawings).

BRIEF DESCRIPTION OF THE DRAWINGS

Fig. 1 is a block diagram showing a control construction example for realizing data distribution described in Japanese Patent Laid-Open No. 2000-103088;

Fig. 2 is a diagram for simply explaining a print operation described in Japanese Patent Laid-Open No. 2000-103088;

Fig. 3 is a perspective view showing the schematic construction of a serial type inkjet printing apparatus according to a first embodiment of the present invention;

Fig. 4 is a diagram for explaining a print operation and multi-valued print data of a multi-pass print of a two-pass according to the first embodiment of the present invention;

Figs. 5A and 5B are block diagrams showing function blocks of image processing in the inkjet printing apparatus according to the first embodiment of the present invention;

Fig. 6 is a flow chart showing a detail of the processing by a gradation lowering processing section 504 and an information storage section 505 shown in Fig. 5;

Fig. 7 is a diagram where attention in the gradation lowering processing explains the movement direction;

Figs. 8A and 8B are diagrams illustrating an error diffusion matrix in an error diffusion processing method used in the gradation lowering processing;

Fig. 9 is a diagram explaining the processing of storing an error and the processing of using the error in the gradation lowering processing;

Fig. 10 is a diagram explaining the processing of storing an error in an information storage area in the gradation lowering processing;

Fig. 11 is a diagram for explaining a print operation and multi-valued print data of a multi-pass print of a two-pass according to a second embodiment of the present invention;

Fig. 12 is a diagram explaining the processing of storing an error and the processing of using the error in the second embodiment;

Fig. 13 is a diagram for explaining a print operation and multi-valued print data of a multi-pass print of a four-pass according to a third embodiment of the present invention;

Figs. 14A and 14B are diagrams explaining the processing of storing an error and the processing of using the error in the third embodiment;

Fig. 15 is a flowchart showing processing executed by the gradation lowering processing section 504 shown in Fig. 5A;

Figs. 16A and 16B are diagrams showing examples of dither matrix in the fourth embodiment;

Figs. 17A and 17B are schematic views for explaining a multi-pass printing operation of the 2 pass and a position of the dither matrix respectively, according to the fourth embodiment;

Fig. 18 is schematic view for explaining the shift processing of the dither matrix according to the fourth embodiment;

Fig. 19 is a schematic view for explaining a multi-pass printing operation of 4 pass and a position of the dither matrix respectively, according to a modified example of the fourth embodiment; and

Fig. 20 is a diagram explaining the processing of storing an error and the processing of using the error in the other embodiment.

DESCRIPTION OF THE EMBODIMENTS

Hereinafter, embodiments of the present invention will be in detail explained with reference to the drawings.

(First Embodiment)

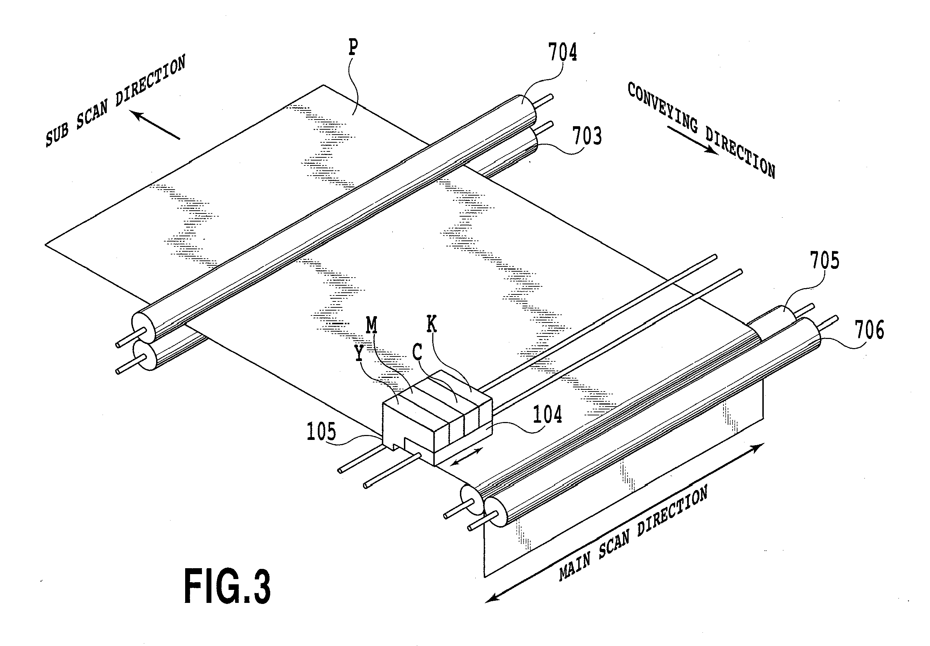

Fig. 3 is a perspective view explaining a schematic structure of a serial type inkjet printing apparatus used in a first embodiment of the present invention. A print head 105 is mounted on a carriage 104 that moves at a constant speed in a main scan direction and ejects ink according to print data in a frequency corresponding to the constant speed. When one time of scan is completed, a conveying roller 704 and an auxiliary roller 703 rotate and a print medium P held between these rollers and between a feeding roller 705 and an auxiliary roller 706 is conveyed in a sub scan direction by an amount corresponding to a print width by the print head 105. This scan and the conveying operation are intermittently repeated to print an image on the print medium P step by step. The sub scan direction will be described later in processing of image data.

The print head 105 includes print heads of black (K), cyan (C), magenta (M) and yellow (Y) which are located in a main scan direction shown in the figure and plurality of ejection openings are arranged in a sub scan direction in the print heads of the respective colors.

The present embodiment relates to print data generation for a multi-pass printing for completing printing of a predetermined area by two times of scan (hereinafter, also called pass) in the aforementioned printing apparatus, and hereinafter, will be explained.

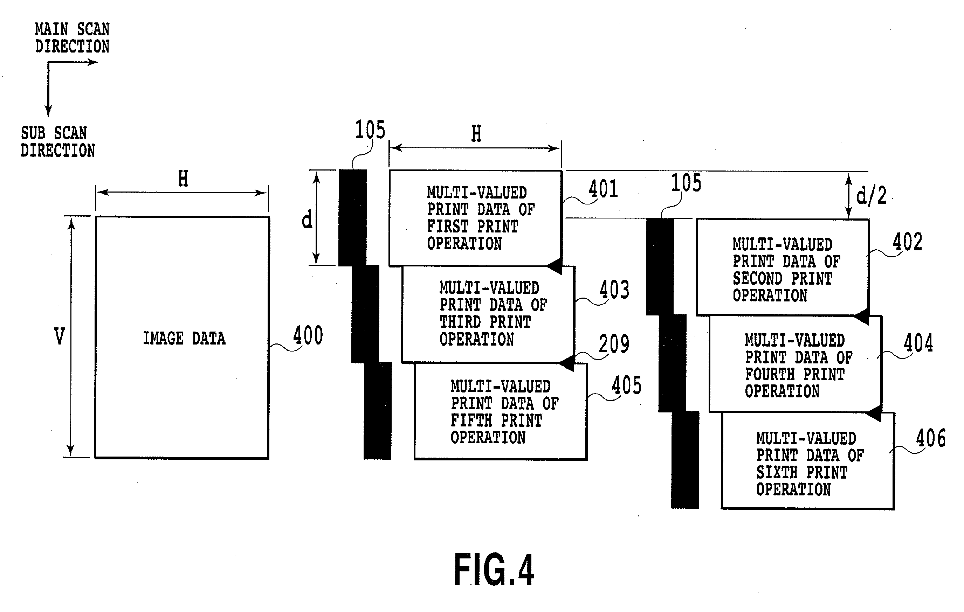

Fig. 4 is a diagram showing a print operation of a multi-pass printing by a single print head. The print head 105 performs printing based upon an amount of multi-valued print data 401 corresponding to an arrangement width "d" of the ejection openings arranged in the sub scan direction in the print head among image data 400 by the first main scan. Here, a size of the image data correspond to "H" pixels ("H" columns) in the main scan direction and "V" pixels ("V" lines) in the sub scan direction. Therefore, a size of each of the multi-valued print data 401-406 corresponds to "H" pixels ("H" columns) in the main scan direction and "d" pixels ("d" lines) in the sub scan direction. In detail, the image data corresponding to an area printed by the first scan among the original image data 400 is, as described in Japanese Patent Laid-Open No. 2000-103088, divided, for example, by a distribution coefficient of 0.55 to obtain the multi-valued image data 401. Here, multi-valued image data 402 corresponding to an area printed by the next second scan is obtained by dividing image data corresponding to the above area among the multi-valued image data 400 by a distribution coefficient of 0.45. In consequence, the area where the multi-valued image data 401 and the multi-valued image data 402 overlap by a width of d/2 is printed with conserving the density of the original image (0.55 + 0.45 = 1). Hereinafter, likewise the multi-valued image data 403, 404, 405, and 406 respectively by the third, fourth, fifth and sixth scans are respectively distributed by distribution coefficients of 0.55, 0.45, 0.55 and 0.45. It goes without saying that "first main scan" means the first main scan in Fig. 4 and is not limited to an actual first scan. The same thing can be true of the number of the other times of the scans. In addition, a fact that the image is divided by the above distribution coefficient means specially a fact that the image data in the corresponding area in the image data 400 are read out and the density value of the individual pixel in the image data is defined as data of a density value obtained by multiplying the density value of the image data by the corresponding distribution coefficient. In other words, the multi-valued print data 401 is extracted from the image data by using the coefficient 0.55 and the multi-valued print data 402 is extracted from the image data by using the coefficient 0.45.

As described above, the scans to the area of a width "d" and the conveying of the print medium corresponding to a width of d/2 in between are repeated to perform printing of the area of the width "d" of each image data by twice of the scans.

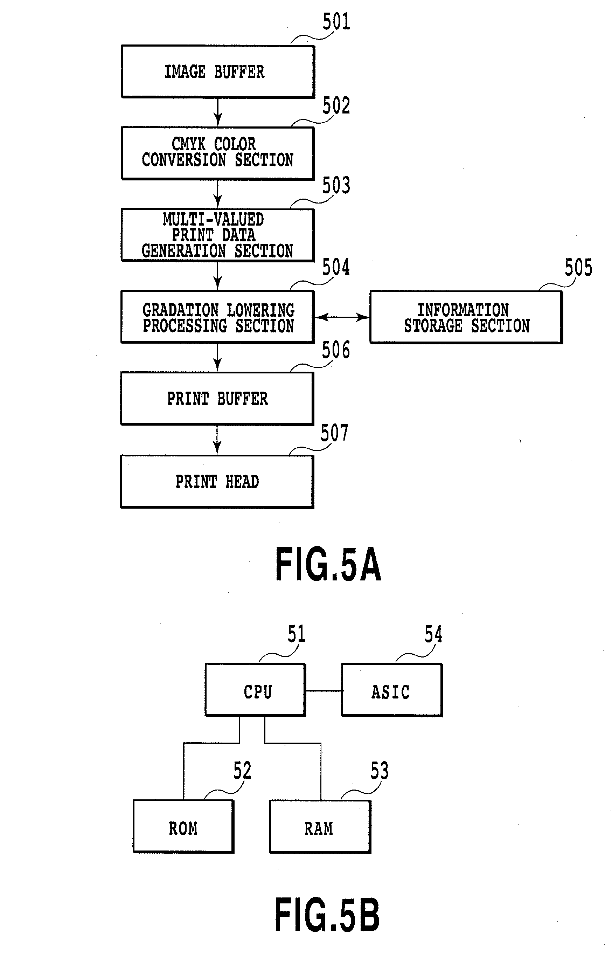

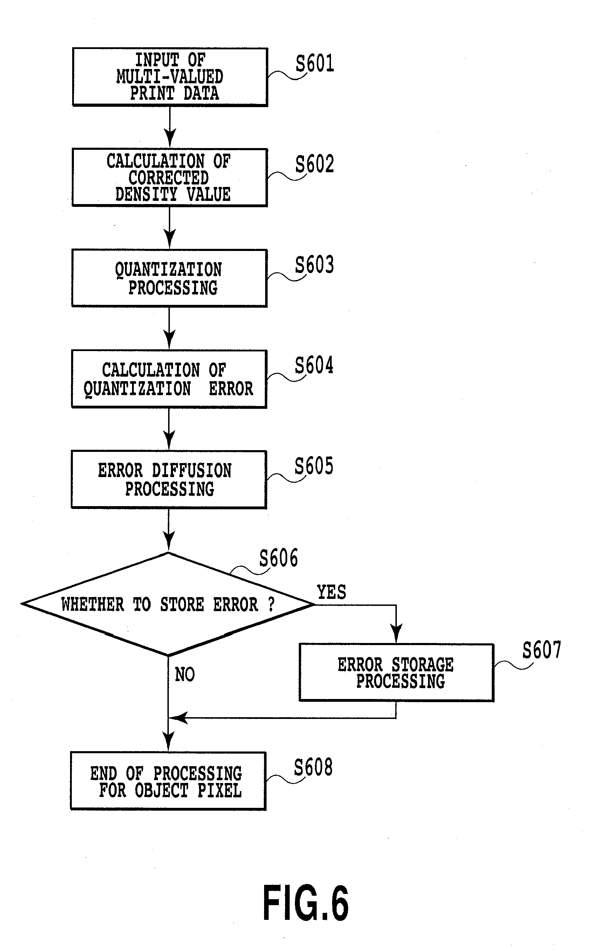

Figs. 5A and 5B are block diagrams showing respective functions in the image processing executed by the printing apparatus in the present embodiment. As shown in Fig. 5B, these functions are realized by that a CPU 51 executes programs in the processing described later in Fig. 6 stored in a ROM 52, and a RAM 53 is used as a work area at the time of executing the processing.

For example, as shown in Fig. 5A, when the printing apparatus receives a print command, as well as image data from a host device connected in an outside (externally) or the like, the image data are stored in an image buffer 501 in the printing apparatus. The print command includes a print mode indicating the number M of the times of the multi-pass print (here, M = 2), a command indicating the kind of the print medium and the like. The image data at this time are multilevel brightness data which are expressed, for example, by 256 gradation levels of eight bits for each of R, G, B, per one pixel. The brightness data stored in the image buffer 501 are transferred to a color conversion section 502 one pixel by one pixel at a predetermining timing. The color conversion section 502 converts RGB data into CMYK data. In this manner, the color conversion section 502 converts the brightness data into density data of the multi values (256 gradations of eight bits) corresponding to ink colors used in the printing apparatus. The converted image data correspond to the image data 400 shown in Fig. 4. The color conversion section 502 generates the image data 400 for each color. A multi-valued print data generation section 503 generates multi-valued print data 401-406 of the respective main scans from the image data 400. That is, the multi-valued print data of the density values corresponding to the above distribution coefficients can be obtained by the multi-valued print data generation section 503.

A gradation lowering processing section 504 executes gradation lowering processing for the multi-valued print data generated by the multi-valued print data generation section 503. The gradation lowering processing section 504 stores an error generated upon executing the gradation lowering processing to the multi-valued print data in an information storage section 505 and uses the error upon executing the gradation lowering processing for multi-valued print data of a printing operation ahead by one print operation (one scan). In this way, the information regarding processing executed by the gradation lowering processing section 504 is stored in the information storage section 505 and is read from the information storage section 505 when the gradation lowering processing section 504 executes the gradation lowering processing. The binary data obtained by executing the gradation lowering processing to the multi-valued print data are stored in a print buffer 506, and ink is ejected from a print head 507 based upon the binary data by each corresponding scan for printing. As shown in Fig. 5B, for example, the RAM 53 is configured to include the image buffer 501, the information storage section 505 and the print buffer 506. ASIC 54 is configured to include the color conversion section 502, the multi-valued data generation section 503 and the gradation lowering processing section 504.

Fig. 6 is a flow chart showing a detail of the processing by the above gradation lowering processing section 504 and the information storage section 505.

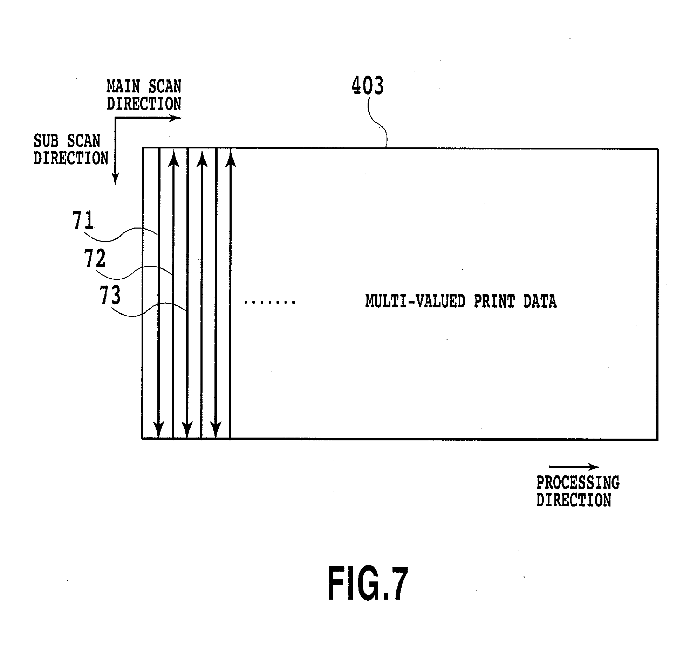

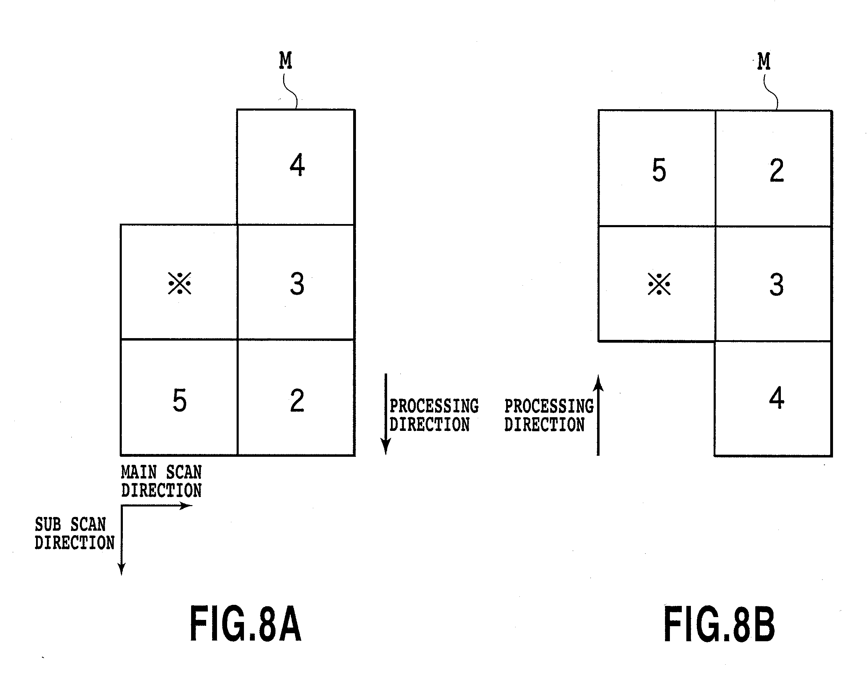

In the present embodiment, as the gradation lowering processing, an error diffusion process for executing binarization processing with the processing bit number of eight bits is used. Fig. 7 is a diagram for explaining the gradation lowering processing by taking the multi-valued print data 403 as an example. First, the gradation lowering processing section 504 executes the gradation lowering processing for a pixel at a first line and first column in the multi-valued print data 403 (left end pixel in the first line). Then, the gradation lowering processing section 504 executes the gradation lowering processing by shifting an error diffusion matrix M by one pixel in a direction shown by an arrow 71 in Fig. 7. The above described processing is executed for respective pixels arranged in the sub scan direction in the multi-valued print data 403. In this manner, the gradation lowering processing section 504 shifts a pixel (an object pixel) for which the gradation lowering processing is executed in a sub scan direction corresponding to the conveying direction of the print medium, every executing of the gradation lowering processing for one pixel. The gradation lowering processing section 504 changes the shift direction of the error diffusion matrix M after executing the gradation lowering processing for the end pixel as the object pixel (pixel of the last line) and shifts the error diffusion matrix by one pixel in the main scan direction. Then, the gradation lowering processing section 504 shifts the error diffusion matrix M in a direction shown by an arrow 72 every executing the gradation lowering processing. The gradation lowering processing section 504 changes the shift direction of the error diffusion matrix M after executing the gradation lowering processing for the end pixel as the object pixel (pixel of the first line) and shifts the error diffusion matrix by one pixel in the main scan direction. Then, the gradation lowering processing section 504 shifts the error diffusion matrix M in a direction shown by an arrow 73 every executing the gradation lowering processing. As the error diffusion matrix M, one shown in Figs. 8A and 8B are used. The gradation lowering processing section 504 shifts the error diffusion matrix M shown in Fig. 8A in the direction shown by the arrows 71, 73 and shifts the error diffusion matrix M shown in Fig. 8B in the direction shown by the arrows 72. An error generated at the gradation lowering processing for the object pixel is distributed in weightings of 3/14 (denominator is a sum of 4 + 3 + 2 + 5) to a pixel neighbored in the right to the object pixel shown by a symbol

"*". Further, the arrangements of the pixels to the object pixel which the error is distributed are placed in the top side, the top right side, the right side and the lower right side to the object pixel in regard to the shifting direction (processing direction) of the object pixel shown by arrows in Figs. 8A and 8B.

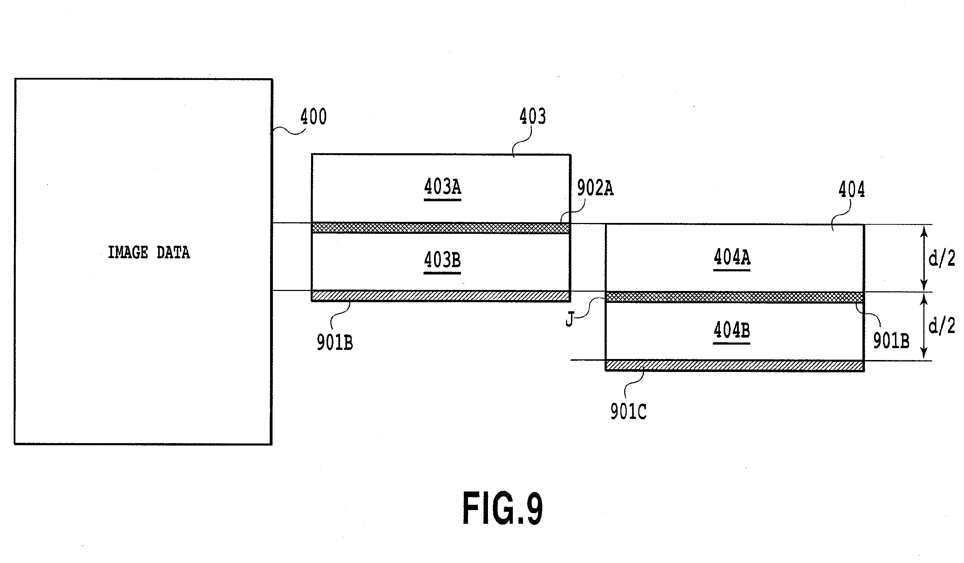

Fig. 9 is diagram for explaining information storing and an error application in the gradation lowering processing to multi-valued print data for each of scan to perform two pass printing, shown in Fig. 4 according to the present embodiment. A image data 400 and multi-valued print data 403, 404 shown in Fig. 9 have respective same sizes as that shown in Fig. 4. Fig. 9 shows an example of the multi-valued print data 403 as one of the multi-valued print data relating to the one time of the scan, and it goes without saying that the following explanation can be applied to the other multi-valued print data. The gradation lowering processing section 504 executes the gradation lowering processing for the multi-valued print data 403, 404 in data unit. Hereinafter, the multi-valued print data 403 are divided by a width of "d/2" for explanation, wherein a data area in the upper side is called a data area 403A and a data area in the lower side is called a data area 403B. Likewise, the multi-valued print data 404 are divided in a width of "d/2", wherein a data area in the upper side is called a data area 404A and a data area in the lower side is called a data area 404B.

In Fig. 9, at the time of executing gradation lowering processing for the multi-valued print data 403, error data is generated and a bunch of generated error data is expressed by data 901B. The data 901B is a group of error data which diffuses toward a downstream side in the sub scan direction from the multi-valued print data 403, among error data generated in the gradation lowering processing for the multi-valued print data 403. Therefore, the group of error data corresponds to data of one pixel in the sub scan direction and "H" pixels in the main scan direction and stored in information storage section 505. The size of the data 901B is determined based on a diffusion range in the sub scan direction of the error diffusion matrix M. In Fig. 9, two pieces of data 901B are shown as a matter of convenience for clearly explaining a position relationship between the data 901B and the multi-valued data 405. The data 901C is a group of error data which diffuses toward a downstream side in the sub scan direction from the multi-valued print data 404, among error data generated in the gradation lowering processing for the multi-valued print data 404. In addition, the data 902A is a group of error data which diffuses toward a downstream side in the sub scan direction from the multi-valued print data 402, among error data generated in the gradation lowering processing for the multi-valued print data 402 (see Fig. 4), which has been executed one step before.

In the following description, the gradation lowering processing when an object pixel exists at the lower end in the area of the multi-valued print data 403 (last line of the multi-valued print image data 403) will be explained with reference to Fig. 6.

The gradation lowering processing section 504 inputs a density value In of the object pixel in the multi-valued print data 403 generated at the multi-valued print data generation section 503 (S601). Next, an accumulation error value Em from peripheral pixels to the object pixel is added to the input density value In to calculate a corrected density value CrtIn = In + Em (S602). In addition, the quantization processing for comparing the corrected density value CrtIn with a threshold value Th is executed (S603). Here, when the corrected density value is larger than the threshold value (CrtIn > Th), the dot is set as ON (output value is "1"), and when the corrected density value is equal to or smaller than the threshold value (CrtIn ≤ Th), the dot is set as OFF (output value is "0") In a case where the dot is set as ON, an error Err generated at the object pixel is calculated by Expression Err = CrtIn - 255, and in a case where the dot is set as OFF, the error Err generated at the object pixel is calculated by Expression Err = CrtIn - 0 (S604).

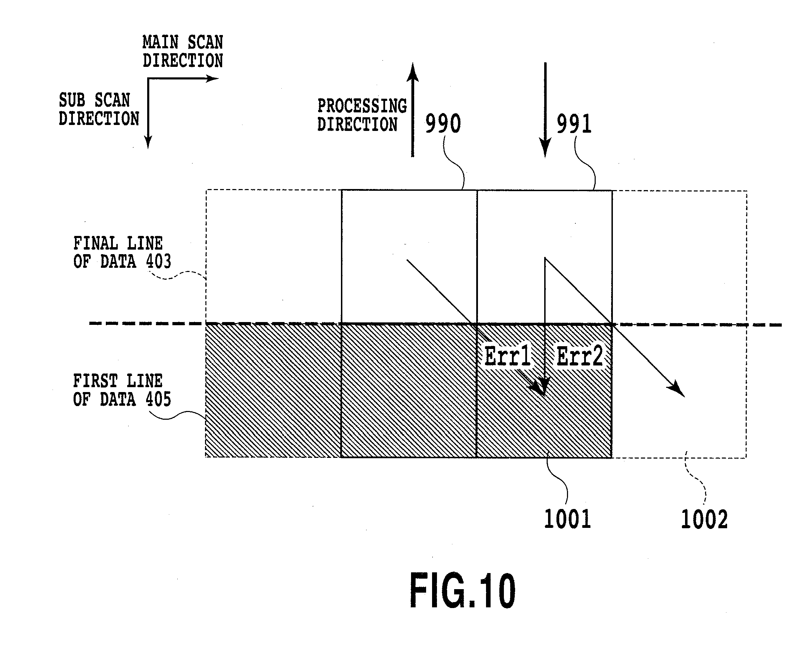

The error thus generated is distributed to peripheral non-processing pixels in the weighting shown in Figs. 8A and 8B according to the error diffusion matrix M shown in Figs. 8A and 8B in the error diffusion processing (S605). Next, referring to Fig. 10, the error diffusion processing to the last line of the multi-valued print data will be explained. For example, when the pixel 990 included in the last line of the multi-valued print data 403 corresponds to an object pixel, the error diffusion matrix M shown in Fig. 8B is used. On the other hand, when the pixel 991 included in the last line of the multi-valued print data 403 corresponds to an object pixel, the error diffusion matrix M shown in Fig. 8A is used. Next, values of errors diffused to a pixel 1001 from the pixels included in the last line of the multi-valued print data 403 will be explained. Weighting for diffusing the error generated in the error diffusion processing to the pixel 990 to the pixel 1001 is "4". Weighting for diffusing the error generated in the error diffusion processing to the pixel 991 to the pixel 1001 is "5". Therefore, the error of Err × 4 ö 14 is distributed to the pixel 1001 from pixel 990 and the error of Err × 5 ö 14 is distributed to the pixel 1001 from pixel 991. These error data making up the data 901B is stored in the information storage section 505 (Fig. 5) by specifying the position of pixel for the distribution (S607). In the present embodiment, as described above, the object pixel moves in a sub scan direction and changes its direction at an end of the area. Therefore, as shown in Fig. 10, for example, in an information storage pixel 1001 in the data group 901B, a sum ExtErr of two errors obtained by addition of a diffused error Err1 from the data group 990 and a diffused error Err2 from the data group 990 which is located above by one pixel is stored (S607).

$$ExtErr = Err1 + Err2$$

$$Err1 = Err\ (x - 1) \times 4 \div 14$$

$$Err2 = Err\ (x) \times 5 \div 14$$

Here, Err (x - 1) shows an error distributed from the pixel (X - 1) in the top left side of the information storage pixel 1001 (x), and Err (x) shows an error distributed from the pixel (x) above by one pixel. The gradation lowering processing to the lower end area in the divided image 403 ends by the above processing (S608).

As described above, the error data stored in the information storage section 505 is used in regard to the multi-valued print data corresponding to the next scan. Therefore, the information storage section 505 stores the error corresponding to a predetermined area (in the present embodiment, the error corresponding to the lower end area) for the next scan.

Next, a case of using the error data obtained as described above for the gradation lowering processing to the multi-valued print data 404 will be explained. The explanation is made with respect to the processing shown in Fig. 6.

Processing performed for the multi-valued print data 404 at step S602 will be explained. As shown in Fig. 9, in processing for an area 404A which corresponds to first to (J-1)th lines of the multi-valued print data 404, an accumulation error value Em from the peripheral pixels is added to the input density value In. Thus, the corrected density value CrtIn = In + Em is calculated. On the other hand, in processing for Jth line of the multi-valued print data 404, in addition to the accumulation error value Em from the peripheral pixels, the error ExtErr generated at the time of executing the error diffusion processing to the lower end area in the multi-valued print data 403 is added to the input density value In. This error ExtErr corresponds to the data 901B in Fig. 9. In consequence, the corrected density value CrtIn is calculated by Expression CrtIn = In + Em + ExtErr. Then, in processing for (J+1) th to last lines of the multi-valued print data 404, the accumulation error value Em from the peripheral pixels is added to the input density value In. At step S603, the CrtIn is used to determine ON/OFF of the dot and the quantization error calculated at step S604 is diffused to the non-processing pixels in the periphery by the error diffusion matrix shown in Fig. 8 at step S605.

At step S606, a determination on whether or not the error is stored is made.

As explained above, according to the present embodiment, the error generated at the time of executing the gradation lowering processing to the multi-valued print data is stored and the error is used at the time of executing the gradation lowering processing to the multi-valued print data relating to the next scan. In this case, the pixel for the distribution of the stored error and the pixel to which the error is applied are the same pixels in image data before being divided at a multi value SMS section 2007. Therefore, the error is received and delivered between the multi-valued print data per the scan unit to conserve the density and as a result, the uneven density or the stripe like density unevenness is reduced, making it possible to obtain a printed image with a high quality.

(Second Embodiment)

The present embodiment relates to an example of applying the error generated at the time of executing the gradation lowering processing to the multi-valued print data to the multi-valued print data after two scans are performed. That is, for example, as seen also from Fig. 4, in a case of a multi-pass printing of a two-pass, the boundary between areas printed by the respective scans is a boundary between areas printed by twice of the scans with one scan interposed in between, such as between an area 401 and an area 403 or between an area 402 and an area 404. In the present embodiment, the error is diffused through this boundary to the other area.

In addition, in the present embodiment, an area for which the gradation lowering processing is executed is set to be data ("d" pixels) corresponding to one scan and successive data ("α" pixels). Therefore, for example, continuity of dot arrangements of respective areas printed with the multi-valued print data 401 and the multi-valued print data 403 shown in Fig. 4 can be realized.

In more detail, by comparing the present embodiment with the above first embodiment, the area for the error to be diffused is the same in view of the image area to be completed between both the embodiments, but in a case of the first embodiment, the area where the error is diffused is a lower half of the area (404 in Fig. 4) to be printed at the next pass. On the other hand, in a case of the present embodiment, the error is diffused to the area (405 in Fig. 4) to be printed after two passes with one pass interposed in between.

In a case of thus diffusing the error to the other area (405) through the boundary between the scan areas, the gradation lowering processing to the other area (405) is resultantly executed discontinuously to the area (403) which has diffused the error to the other area. As a result, the continuity of the dot arrangements printed finally is possibly damaged. On the other hand, in the present embodiment, as described above, the area for the gradation lowering processing is defined as an area wider than the area to be printed by each scan, thus preventing the above problem in advance.

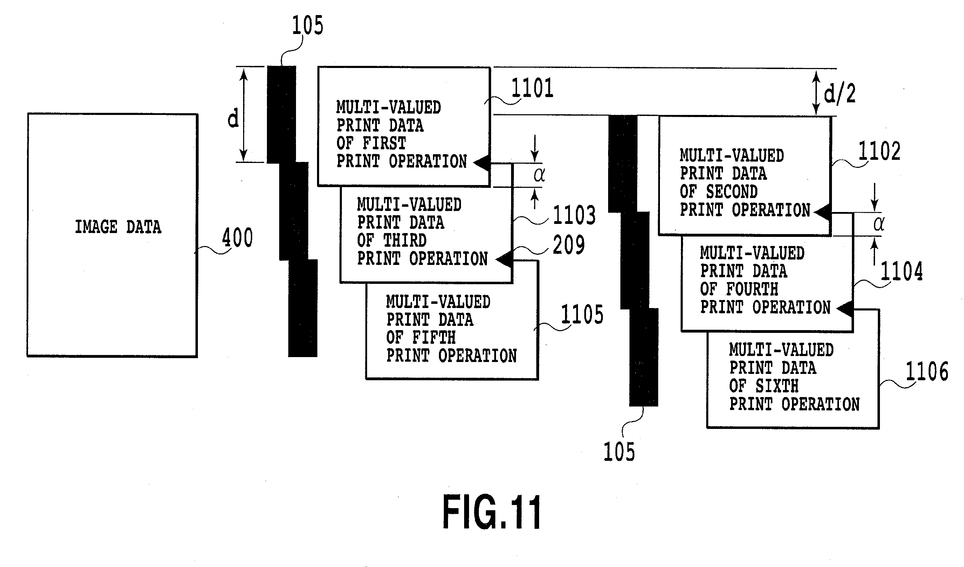

Fig. 11 is a diagram corresponding to Fig. 4 according to the above first embodiment. As shown in Fig. 11, the area of the multi-valued print data as an object of the gradation lowering processing is sized to be larger by an $\alpha$ pixels toward the downstream side in the sub scan direction than the area printed by the print head 105 for each scan. Multi-valued print data 1101, 1102, and so on as the respective divided image data of the image data are data where the individual pixel has a density value respectively distributed by a predetermined coefficient in the same way as in the first embodiment.

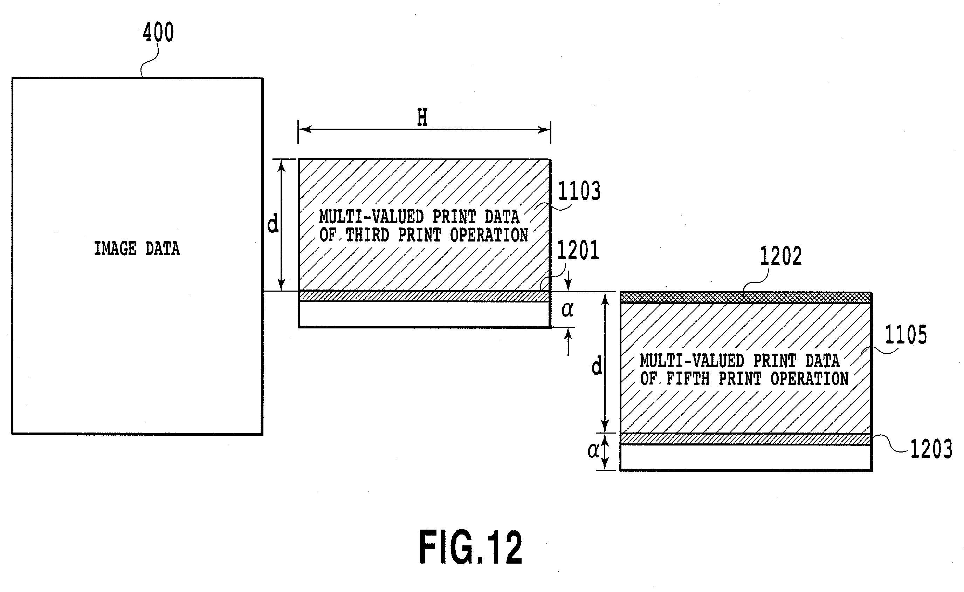

Fig. 12 is a diagram explaining a detail of the gradation lowering processing in the present embodiment. The size of the image data 400 is the same as the case shown in Fig. 4. As shown in Fig. 12, in the print data generation for the third scan as an example, the gradation lowering processing is executed to the multi-valued print data composed of multi-valued print data 1103 and the neighboring data expanded by the $\alpha$ pixels toward the downstream side in the sub scan direction. That is, the gradation lowering processing is executed to the multi-valued print data of "H" pixels in the main scan direction and "d+$\alpha$" in the sub scan direction. In an actual printing, printing is performed based upon print data in a hatched portion shown in Fig. 12 among the binary data obtained by thus executing the gradation lowering processing. In detail, as shown in Fig. 7, the gradation lowering processing is executed in above described data unit. At this time, the data 1201 generated in the gradation lowering processing for the last line (dth line) of the data 1103 is stored in the information storage section 505. Then the stored error is used in for the first line of the multi-valued print data 1105 as the neighboring area and printed after two scans. In processing for the multi-valued print data 1105, the gradation lowering processing is executed based on the data unit of "H" pixels in the main scan direction and "d+$\alpha$" in the sub scan direction, similarly to the multi-valued print data 1103. The data 1203 generated in the gradation lowering processing for the last line (dth line) of the data 1105 is stored in the information storage section 505. It should be noted that the calculation process of errors, the calculation process of errors to be stored, and the application process of the stored errors are the same as those in the first embodiment and therefore, these explanations are omitted.

As described above, according to the present embodiment, the gradation lowering processing is executed to the area larger in the sub scan direction than the area printed by the print head, and the error calculated by executing the gradation lowering processing to the lower end area in the area printed by a main scan is stored. Therefore, the error to be stored in the information storage area is the error calculated after receiving an influence of error propagation from the area lower than the information storage area. In addition, this error is used between multi-valued print data in which the areas printed by the main scan are in contact with each other. Therefore, the density is stored without damages of continuity of the dot arrangements between the main scans having the boundary in between and connection of the dots between the main scans is made smooth. Thus in the present embodiment, for example, a memory is required for storing the error for distributing the error corresponding to the multi-valued print data 1102 to the multi-valued print data 1104 in the duration of distributing the information storage area 1201 corresponding to the multi-valued print data 1103 in Fig. 11 to the multi-valued print data 1105. Thus in the present embodiment, since the memory area for storing the errors corresponding to the two scans is required, the memory area for storing the error is larger than in the first embodiment, but not only the uneven density is reduced, but also the connection of the dots between the areas printed by the respective scans is made smooth and the stripe like density unevenness is further reduced, making it possible to obtain a printed image with a high quality. (Third Embodiment)

The present embodiment takes a multi-pass print of four-pass as an example where an error generated at the time of executing gradation lowering processing to the multi-valued print data is stored in the same way as in the first embodiment. Specially the stored error is divided to be used for the multi-valued print data after one scan and the multi-valued print data after two scans in respective predetermined ratios (1/3 to the multi-valued print data after one scan and 2/3 to the multi-valued print data after two scans). It should be noted that the printing operation, the processing direction of the error diffusion process and the error diffusion matrix are the same as those in the aforementioned first embodiment.

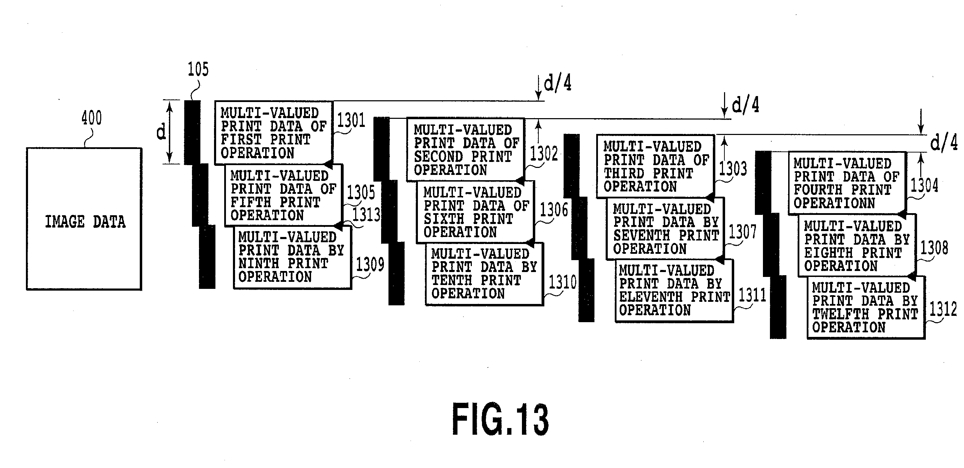

Fig. 13 is a diagram corresponding to Fig. 4 according to the first embodiment. In the present embodiment, because of the multi-pass printing of the four-pass, each multi-valued print data generated in the multi-valued print data generation section 503 (Fig. 5) are data obtained by reducing a density value of each pixel in the original image data 400 with four distribution coefficients (sum of four coefficients is 1). After the first printing operation (scan) is performed, the conveying operation of d/4 is performed in a direction intersecting with the main scan and then the second print operation is performed. By paying attention on the same image area where the first to fourth main scans overlap, since printing with the density reduced by the above coefficient is performed four times on the area, the density of the original image data is conserved. The main scan is repeated through the conveying operation to complete printing of all the image areas by four times of the main scans respectively.

The following will in detail explain the processing of storing errors for multi-valued print data 1305 in regard to the fifth scan and for multi-valued print data 1306 in regard to the sixth scan, and an example of using these stored errors for the multi-valued print data 1307 in regard to the seventh scan.

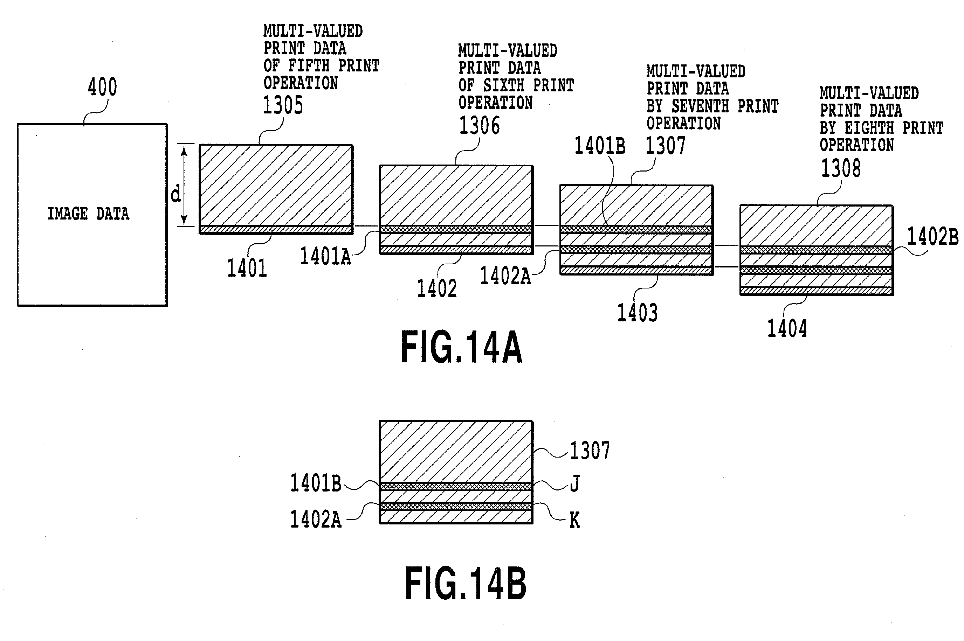

As shown in Fig. 14A, as same in the first embodiment, the gradation lowering processing section 504 executes the gradation lowering processing to the multi-valued print data 1305 and store error data 1401 generated in the gradation lowering processing for the last line of the multi-valued print data 1305 in the information storage section 505. The error data 1401 is divided into error data 1401A and error data 1401B. The error data 1401A is used in the gradation lowering processing for the multi-valued print data 1306 and the error data 1401B is used in the gradation lowering processing for the multi-valued print data 1307. Likewise, also in a case of executing the gradation lowering processing to the multi-valued print data 1306, error data 1402 is stored in the information storage section 505. The error data 1402 is divided into error data 1402A and error data 1402B. The error data 1402A is used in the gradation lowering processing for the multi-valued print data 1307 and the error data 1402B is used in the gradation lowering processing for the multi-valued print data 1308.

As described above, the error stored in the information storage section 505 is divided and applied in the aforementioned ratio to the multi-valued print data relating to the next scan and the multi-valued print data relating to the scan after two scans. Therefore, the information storage section 505 is provided with a memory area for retaining data corresponding to a plurality of lines. For example, the information storage section 505 is provided with an area for storing the data 1401, 1402 and 1403. As another example, the information storage section 505 is provided with an area for storing the data 1401A, 1401B, 1402A, 1402B and 1403. It should be noted that when assigning of memory areas in the information storage section 505, used memory areas may be assigned and used for storing newly generated data. Therefore, the assigning of memory areas is not limited to that according to the present embodiment.

Next, processing executed at step S602 to the multi-valued data 1307 will be explained referring to Fig. 14B. In the processing to first to (J-1)th lines of the multi-valued data 1307, the accumulation error Em from the periphery pixels is added to the input density value In. On the other hand, in processing to Jth line of the multi-valued data 1307, in addition to the accumulation error Em from the periphery, error data 1401B (error amount corresponding to 2/3 of the error data 1401) is added to the input density value In. Further, in processing to Kth line of the multi-valued data 1307, in addition to the accumulation error Em from the periphery, error data 1402A (error amount corresponding to 1/3 of the error data 1402) is added to the input density value In. Then, in processing to remaining lines of the multi-valued data 1307, the accumulation error Em from the periphery pixels is added to the input density value In. As described above, the corrected density value CrtIn calculated in step S602 is used to determine ON/OFF of the dot at step S603 and the calculated quantization error is diffused to the peripheral non-processing pixels by using the error diffusion matrix shown in Fig. 8. processing to other multi-valued print data is the same as in the above.

In addition, in a case of performing many times of the scans on the same print area as in the case of the present embodiment, when the stored error is used only for one multi-valued print data, the storage quantity of the corresponding main scan possibly largely changes. As a result, a ratio of the print quantity of each main scan printing the same position of the image differs only in the error application area, which may be possibly recognized as the uneven streak upon performing a print by plural times of the main scans. In the present embodiment, by dividing the stored error in a predetermined ratio for use, the density can be stored without largely changing the ratio of the print quantity of each main scan printing the same position of the image, and the output image with a high quality in which the uneven density or the uneven streak is reduced can be obtained.

(Fourth Embodiment)

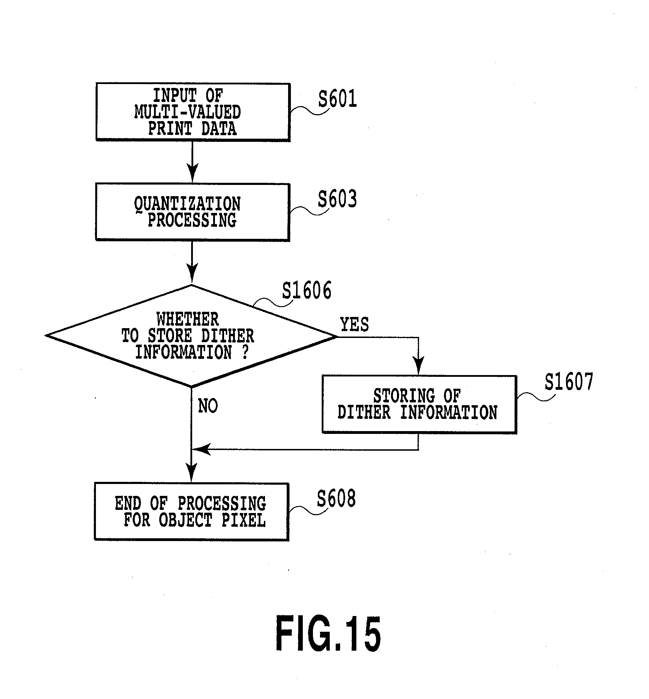

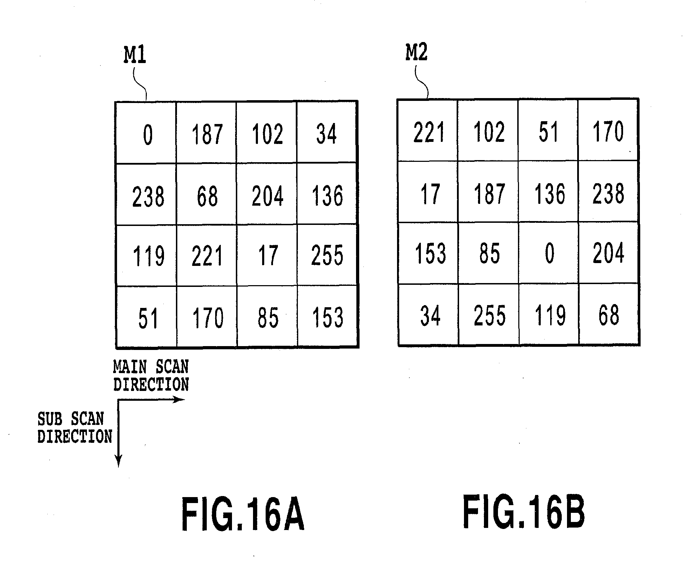

In a fourth embodiment of the present invention, a case in which dither processing is performed as the gradation lowering processing will be explained. Since configuration according to the fourth embodiment is similar to the configuration of the first embodiment (Figs. 5A and 5B), the explanation of the configuration is omitted. A printing operation of the present embodiment will be explained for the multi-pass printing of two pass as in the second embodiment. Fig. 15 is a flowchart showing processing executed by the gradation lowering processing section 504 shown in Fig. 5A. In present embodiment, processing bit number is 8 bit and the binarization is performed to the 8 bit data, similarly to the first embodiment. A shifting manner of an object pixel when executing processing is also the same as in the first embodiment. The present embodiment performs the dither processing using dither matrices M1, M2 shown in Figs. 16A and 16B.

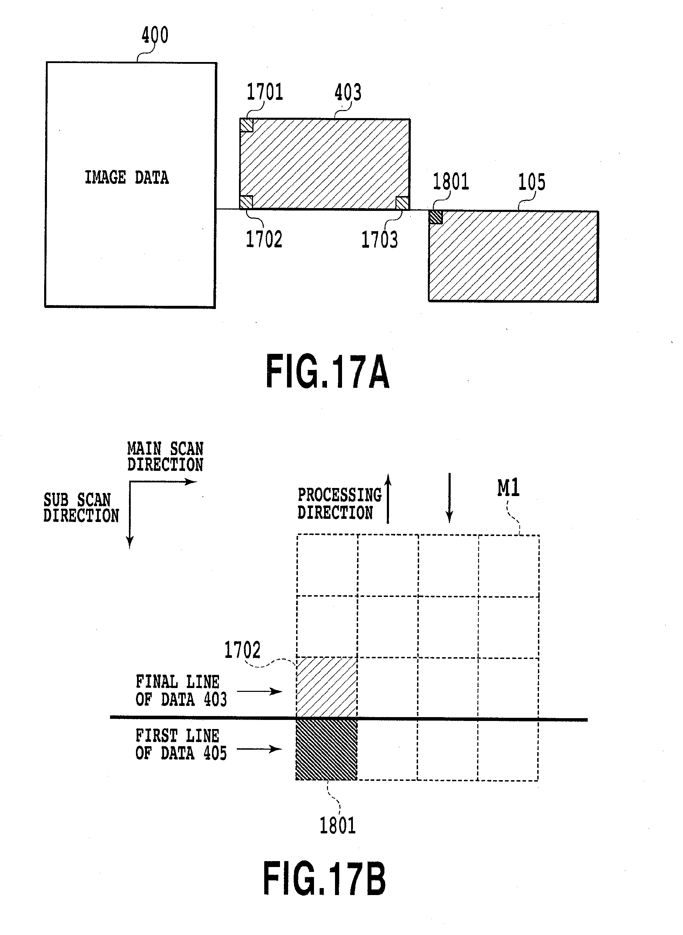

First, as shown in Fig. 17 A, a pixel 1701 in the multi-valued print data 403 is determined to be an object pixel. The density value In of the pixel 1701 is inputted (S601). The density value In is compared with a threshold value Th (S603). Here, the threshold values for use are threshold values of the respective dither matrices shown in Figs. 16A and 16B. When the density value of the object pixel is larger than the threshold value (IN > Th), data is set to be dot ON (output value "1" ), and when the density value of the object pixel is equal to or smaller than the threshold value (IN $\leq$ Th), data is set to be dot OFF (output value "0" ). Next, it is determined whether or not to store dither information (S1606). When affirmative judgment is made at step S1606, the dither information is stored (S1607). When negative judgment is made at step S1606, the processing is completed. The above described processing is performed for all pixels extending to a pixel 1703. At this time, in a process step for executing processing for the multi-valued print data 403, the dither information at the time of setting the pixel 1702 to be the object pixel is stored in the information storage section 505.

Fig. 17A is diagram for explaining a relation between data 403 used in a third printing operation and data 405 used in a fifth printing operation. Fig. 17B is a diagram for explaining a relation of a boundary between the data 403 and the data 405 to positions in the dither matrix. If position information in the dither matrix is determined to be assigned to 1 to 16, the pixel (position) 1702 corresponds to the position "9" in the dither matrix M1 and the pixel (position) 1801 corresponds to the position "13" in the dither matrix M1, in Fig. 17B.

Here, most left end and lowest end position in the multi-valued print data 403 corresponds to the pixel 1702. Since lower side pixel 1801 by one pixel form the pixel 1702 corresponds to a starting pixel in the multi-valued print data 405, the position information (13) in the dither matrix as the dither information is stored in the information storage section 505. In addition, as the dither information, information on pixel position and information on dither matrix (M1) are also stored in the memory. When executing processing for the multi-valued print data 405, the dither information is read from the memory for processing. As shown in Fig. 16A, since the threshold value of the position "13" is "51" , the quantization for the pixel 1801 as a first pixel of the data 405 is executed using the threshold value "51" . As described above, the dither information is stored in the memory and the stored information is used for the quantization for the data for a scan after two scans, and thus a deterioration of image quality at the boundary between image data is reduced.

In the present embodiment, processing for data used for second printing operation and data used for fourth printing operation is executed similarly by using the dither matrix M2 shown in Fig. 16B. As just described, the dither matrices are changed every scan of the multi-pass printing and therefore the "robustness" can be increased.

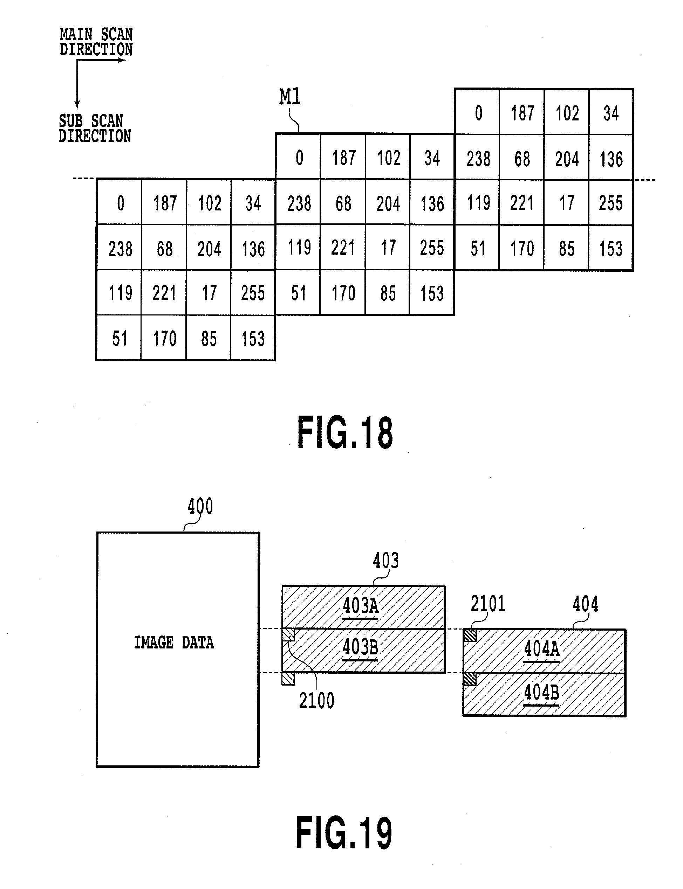

The above described fourth embodiment shows the example in which the dither matrix shown in Fig. 16A is applied repeatedly in the main and sub scan directions in the multi-valued print data. However, a dither matrix applied for the dither processing may be used so that a position of the dither matrix is changed according to a position in the main and sub scan directions in the multi-valued print data. For example, as shown in Fig. 18, the dither matrix M1 may be sifted as matrix unit by one pixel unit in the sub scan direction, every executing of processing. In this case, information on shifted position of the matrix may be sorted as the dither information.

As another example, the dither information may be applied for executing processing for the multi-valued print data of next printing operation. For example, as shown in Fig. 19, the dither information stored with respect to an upper half area 403A of the multi-valued print data 403 may be applied to the start pixel 2101 of the dither processing in an upper half area 404A of the multi-valued print data 404. In this case, the multi-valued print data is divided into upper half and lower half parts and the two dither matrices of the above embodiment. More specifically, when the dither matrix M1 is applied to the upper half area 403A of the multi-valued print data 403, the dither matrix M1 is also applied to the upper half area 404A of the multi-valued print data 404. Similarly, the dither matrix M2 is applied to the lower half area 403B of the multi-valued print data 403 and the lower half area 404B of the multi-valued print data 404.

As described above, the dither information is stored in the multi-pass printing and the application pixel of the stored dither information is determined in accordance with the boundary ensuring the dispersion property of dots. The boundary ensuring may be determined based on the combination including print medium, ink, temperature, humidity, and other parameters.

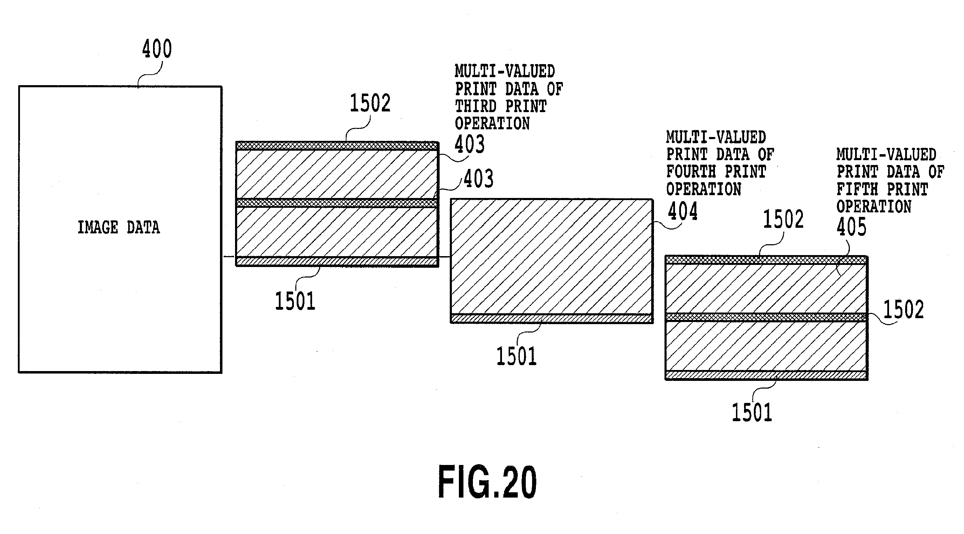

As described above, the four embodiments are explained, but the present invention is not limited to these embodiments and can be carried out in various modifications within the scope of the invention. For example, the bit number of the gradation lowering processing may be any number and the processing direction of the gradation lowering processing may be any processing direction. The error diffusion matrix described above is shown simply as an example, and as long as the above embodiment is satisfied, the dispersion range of the error diffusion matrix and the distribution ratio of the error are not limited to specific values. In the present embodiment, the error diffusion process is explained as an example, but any gradation lowering processing method may be used as long as it is the gradation lowering processing generating the error. In the present embodiment, there is shown an example of storing the error dispersed in the information storage area as explained in Fig. 10, but the error may be stored in any form. For example, in a case where the error Err calculated at step S604 in Fig. 6 is stored and is used in the error application area, the error dispersed corresponding to the weighting of the error diffusion matrix may be calculated. In addition, unlike the embodiment as shown above, both the information storage area and the error application area may not exist in one multi-valued print data. For example, taking the multi-pass print of the two-pass as an example, as shown in Fig. 20 the processing of storing only the error dispersed in the information storage area at the time of executing the gradation lowering processing to the lower end areas in the multi-valued print data 403 and 404 is executed. All the stored errors may be used in the corresponding error application area in the multi-valued print data 405. In the present embodiment, there is shown an example of the inkjet printing apparatus as the device for performing the print operation using the print head, but as long as a device is a printing apparatus forming an image by plural times of print operations on a predetermined area of the print medium, the present invention can be applied to any device.

(Other Embodiment)

The following is obtained by generalizing each embodiment described above. The image processing apparatus generating print data for printing an image in a predetermined area by M times (M ≥ 2) of scans of the print head on the predetermined area of the print medium generates multi-valued print data of each of M times of the scans based upon the data of the image. The gradation lowering processing is executed to the generated multi-valued print data by each of the M times of the scans and the errors generated by the gradation lowering processing are stored. Attention is paid on from K-th multi-valued print data to (K + N)-th multi-valued print data among the data generated by M times of the scans (N ≤ M). At this time the error generated at the time of executing the gradation lowering processing to the K-th multi-valued print data is used for executing the gradation lowering processing to at least one of (K + 1)-th multi-valued print data to (K + N)-th multi-valued print data.

The first and second embodiments explained above relate to the construction of executing the gradation lowering processing according to the present invention in the printing apparatus, but the image processing including this processing may be executed by the host device such as a personal computer. Thus the printing apparatus or the host device constitutes the image processing apparatus according to the embodiment of the present invention.

(Further Embodiment)

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image processing apparatus configured to generate image data for printing an image on a predetermined area of a print medium by performing plural times of scan of a print head (507) to the predetermined area, said apparatus comprising:

   data generation means (503) for generating multi-valued print data (401-406) for each of the plural times of scan, based on the image data;
   gradation lowering means (504) for executing gradation lowering processing to the generated multi-valued print data for each of the plural times of scan; and
   storage means (505) for storing information generated in the gradation lowering processing;

   wherein said gradation lowering means (504) is configured to read the information from said storage means such that information relating to one multi-valued print data is used during the gradation lowering processing of at least one subsequent multi-valued print data.

2. The image processing apparatus as claimed in claim 1,
   wherein, for Kth to K+Nth multi-valued print data, wherein N is equal to or smaller than the plural times of scan and wherein K represents a respective multi-valued print data, the information generated in the gradation lowering processing for the Kth multi-valued print data is used for the gradation lowering processing for at least one of K+1th to K+Nth multi-valued print data.

3. The image processing apparatus as claimed in claim 2,
   wherein the information generated in the gradation lowering processing for the Kth multi-valued print data is used for the gradation lowering processing for K+Mth multi-valued print data,
   wherein M represents the total number of scans to be performed.

4. The image processing apparatus as claimed in any preceding claim, wherein the multi-valued print data subjected to the gradation lowering processing is data corresponding to an area greater than an area to which printing is performed in one scan.

5. The image processing apparatus as claimed in any preceding claim, wherein the information includes error information generated in the gradation lowering processing.

6. The image processing apparatus as claimed in claim 5,
   wherein the storage means (505) is configured to store error information corresponding to a predetermined area of the one multi-valued print data for use in at least one subsequent scan.

7. The image processing apparatus as claimed in claim 6,
   wherein the error information corresponding to the predetermined area of the one multi-valued print data is for use in at least one successive scan and/or wherein the error information corresponding to the predetermined area of the one multi-valued print data is for use in every other scan.

8. The image processing apparatus as claimed in any one of claims 5 to 7, wherein the gradation lowering processing means (504) is configured to divide the error information in a predetermined ratio for use.

9. The image processing apparatus as claimed in any preceding claim, wherein the information includes position information of a matrix used in the gradation lowering processing.

10. The image processing apparatus as claimed in any preceding claim, wherein the gradation lowering processing is gradation lowering processing in which density is conserved.

11. The image processing apparatus as claimed in any preceding claim, wherein the gradation lowering processing is dither processing.

12. A printing apparatus comprising the image processing apparatus as claimed in any preceding claim.

13. An image processing method for generating image data for printing an image on a predetermined area of a print medium by performing plural times of scan of a print head to the predetermined area, said method comprising:

   a data generation step of generating multi-valued print data for each of the plural times of scan, based on the image data;
   a gradation lowering step of executing gradation lowering processing to the generated multi-valued print data for each of the plural times of scan; and
   a storage step of storing information generated in the gradation lowering processing;
   a reading step for reading said stored information such that information relating to one multi-valued print data is used during the gradation lowering processing of at least one subsequent multi-valued print data.

14. A program which, when executed by a computer, causes the computer to carry out the method of claim 13.

15. A storage medium storing the computer program according to claim 14.

**FIG.1**

IMAGE DATA 200

207

d

201 208 d/2

PRINTED IMAGE
OF FIRST SCAN

PRINTED IMAGE
OF SECOND SCAN 202

203

PRINTED IMAGE
OF THIRD SCAN

PRINTED IMAGE
OF FOURTH SCAN 204

209

205

PRINTED IMAGE
OF FIFTH SCAN

PRINTED IMAGE
OF SIXTH SCAN 206

**FIG.2**

FIG.3

CONVEYING DIRECTION

SUB SCAN DIRECTION

MAIN SCAN DIRECTION

704
703
705
706
704
P
M
Y
C
K
104
105

MAIN SCAN
DIRECTION

SUB SCAN
DIRECTION

H

V    IMAGE DATA    400

105    H

d

MULTI-VALUED
PRINT DATA OF
FIRST PRINT
OPERATION    401    105    d/2

MULTI-VALUED
PRINT DATA OF
SECOND PRINT
OPERATION    402

MULTI-VALUED
PRINT DATA OF
THIRD PRINT
OPERATION    403

MULTI-VALUED
PRINT DATA OF
FOURTH PRINT
OPERATION    404

MULTI-VALUED
PRINT DATA OF
FIFTH PRINT
OPERATION    405    209

MULTI-VALUED
PRINT DATA OF
SIXTH PRINT
OPERATION    406

FIG.4

EP 2 214 395 A2

```
                              ┌──────────────┐  501
                              │ IMAGE BUFFER │
                              └──────┬───────┘
                                     ↓          502
                              ┌──────────────┐
                              │  CMYK COLOR  │
                              │ CONVERSION SECTION │
                              └──────┬───────┘
                                     ↓          503
                              ┌──────────────┐
                              │ MULTI-VALUED │
                              │  PRINT DATA  │
                              │ GENERATION SECTION │
                              └──────┬───────┘
                                     ↓          504
           ┌────────────────────┐         ┌──────────────┐  505
           │ GRADATION LOWERING │ ←────→  │ INFORMATION  │
           │ PROCESSING SECTION │         │ STORAGE SECTION │
           └──────┬─────────────┘         └──────────────┘
                  ↓          506
           ┌──────────────┐
           │ PRINT BUFFER │
           └──────┬───────┘
                  ↓          507
           ┌──────────────┐
           │  PRINT HEAD  │
           └──────────────┘
```

# FIG.5A

```
          51                    54
     ┌──────────┐         ┌──────────┐
     │   CPU    │─────────│   ASIC   │
     └────┬─────┘         └──────────┘
       ┌──┴──┐
    52 │     │ 53
 ┌─────────┐ ┌─────────┐
 │   ROM   │ │   RAM   │
 └─────────┘ └─────────┘
```

# FIG.5B

```
        ┌─────────────────┐
        │    INPUT OF     │   S601
        │  MULTI-VALUED   │
        │   PRINT DATA    │
        └─────────────────┘
                 │
                 ▼
        ┌─────────────────┐
        │  CALCULATION OF │   S602
        │    CORRECTED    │
        │  DENSITY VALUE  │
        └─────────────────┘
                 │
                 ▼
        ┌─────────────────┐
        │  QUANTIZATION   │   S603
        │   PROCESSING    │
        └─────────────────┘
                 │
                 ▼
        ┌─────────────────┐
        │  CALCULATION OF │   S604
        │ QUANTIZATION  ERROR │
        └─────────────────┘
                 │
                 ▼
        ┌─────────────────┐
        │ ERROR DIFFUSION │   S605
        │   PROCESSING    │
        └─────────────────┘
                 │
                 ▼
            ◇ S606
      WHETHER TO STORE ERROR ?        YES
                 │                          │
                NO                          ▼
                 │                 ┌─────────────────┐
                 │                 │  ERROR STORAGE  │  S607
                 │                 │   PROCESSING    │
                 │                 └─────────────────┘
                 ▼
        ┌─────────────────┐
        │ END OF PROCESSING│  S608
        │  FOR OBJECT PIXEL│
        └─────────────────┘
```

# FIG.6

MAIN SCAN
DIRECTION

SUB SCAN
DIRECTION

403

71

72

73

. . . . . . .

MULTI-VALUED PRINT DATA

PROCESSING
DIRECTION

# FIG.7

EP 2 214 395 A2

M

| 4 |
|---|

| ※ | 3 |
|---|---|
| 5 | 2 |

↓ PROCESSING DIRECTION

MAIN SCAN DIRECTION →

SUB SCAN DIRECTION ↓

**FIG.8A**

M

| 5 | 2 |
|---|---|
| ※ | 3 |
| | 4 |

↑ PROCESSING DIRECTION

**FIG.8B**

**FIG.9**

EP 2 214 395 A2

FIG.10

FIG.11

**FIG.12**

EP 2 214 395 A2

400

IMAGE DATA

105

d

MULTI-VALUED PRINT DATA OF FIRST PRINT OPERATION 1301

MULTI-VALUED PRINT DATA OF FIFTH PRINT OPERATION 1305

MULTI-VALUED PRINT DATA BY NINTH PRINT OPERATION 1313

1309

↓d/4

MULTI-VALUED PRINT DATA OF SECOND PRINT OPERATION 1302

MULTI-VALUED PRINT DATA OF SIXTH PRINT OPERATION 1306

MULTI-VALUED PRINT DATA BY TENTH PRINT OPERATION 1310

↓d/4

MULTI-VALUED PRINT DATA OF THIRD PRINT OPERATION 1303

MULTI-VALUED PRINT DATA BY SEVENTH PRINT OPERATION 1307

MULTI-VALUED PRINT DATA BY ELEVENTH PRINT OPERATION 1311

↓d/4

MULTI-VALUED PRINT DATA OF FOURTH PRINT OPERATIONN 1304

MULTI-VALUED PRINT DATA BY EIGHTH PRINT OPERATION 1308

MULTI-VALUED PRINT DATA BY TWELFTH PRINT OPERATION 1312

FIG.13

MULTI-VALUED PRINT DATA OF FIFTH PRINT OPERATION 1305

MULTI-VALUED PRINT DATA OF SIXTH PRINT OPERATION 1306

MULTI-VALUED PRINT DATA BY SEVENTH PRINT OPERATION 1401B 1307

MULTI-VALUED PRINT DATA BY EIGHTH PRINT OPERATION 1308

400

IMAGE DATA

d

1401

1401A

1402

1402A

1403

1402B

1404

**FIG.14A**

1401B
1402A

1307
J
K

**FIG.14B**

EP 2 214 395 A2

INPUT OF
MULTI-VALUED
PRINT DATA — S601

QUANTIZATION
PROCESSING — S603

S1606

WHETHER
TO STORE DITHER
INFORMATION ?

YES

NO

STORING OF
DITHER INFORMATION — S1607

END OF PROCESSING
FOR OBJECT PIXEL — S608

FIG.15

M1

| 0 | 187 | 102 | 34 |
|---|---|---|---|
| 238 | 68 | 204 | 136 |
| 119 | 221 | 17 | 255 |
| 51 | 170 | 85 | 153 |

M2

| 221 | 102 | 51 | 170 |
|---|---|---|---|
| 17 | 187 | 136 | 238 |
| 153 | 85 | 0 | 204 |
| 34 | 255 | 119 | 68 |

MAIN SCAN
DIRECTION →

SUB SCAN
DIRECTION ↓

## FIG.16A          FIG.16B

400

1701    403

IMAGE DATA

1702        1703

1801    105

## FIG.17A

MAIN SCAN
DIRECTION

SUB SCAN
DIRECTION

PROCESSING
DIRECTION                M1

1702

FINAL LINE
OF DATA 403

FIRST LINE
OF DATA 405

1801

## FIG.17B

MAIN SCAN
DIRECTION

SUB SCAN
DIRECTION

M1

|  | 0 | 187 | 102 | 34 |
|---|---|---|---|---|
|  | 238 | 68 | 204 | 136 |
|  | 119 | 221 | 17 | 255 |
|  | 51 | 170 | 85 | 153 |

| 0 | 187 | 102 | 34 |
|---|---|---|---|
| 238 | 68 | 204 | 136 |
| 119 | 221 | 17 | 255 |
| 51 | 170 | 85 | 153 |

| 0 | 187 | 102 | 34 |
|---|---|---|---|
| 238 | 68 | 204 | 136 |
| 119 | 221 | 17 | 255 |
| 51 | 170 | 85 | 153 |

## FIG.18

400

IMAGE DATA

403

403A

403B

2100

2101    404

404A

404B

## FIG.19

EP 2 214 395 A2

400

IMAGE DATA

1502

MULTI-VALUED
PRINT DATA OF
THIRD PRINT
OPERATION
403

403

1501

MULTI-VALUED
PRINT DATA OF
FOURTH PRINT
OPERATION
404

1501

MULTI-VALUED
PRINT DATA OF
FIFTH PRINT
OPERATION
405

1502

1502

1501

FIG.20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000103088 A